# EUROPEAN PATENT SPECIFICATION

(11) **EP 3 330 181 B1**
(45) Date of publication and mention of the grant of the patent: **24.07.2019**
(21) Application number: 17204629.4
(22) Date of filing: 30.11.2017
(51) Int. Cl.: B64D 13/06

(54) **AIR DISTRIBUTION MANIFOLD WITH INTEGRAL MULTIZONE THERMOELECTRIC TEC TRIM SYSTEM**
LUFTVERTEILUNGSBLOCK MIT INTEGRIERTEM MEHRZONIGEM THERMOELEKTRISCHEM TEC TRIMMSYSTEM
COLLECTEUR DE DISTRIBUTION D'AIR INTÉGRANT UN SYSTÈME THERMOÉLECTRIQUE TEC MULTIZONE

(30) Priority: 30.11.2016 US 201615364849
(43) Date of publication of application: 06.06.2018
(73) Proprietor: Hamilton Sundstrand Corporation, Charlotte, NC 28217 (US)
(72) Inventor: ARMY, Donald E., Enfield, CT 06082 (US)
(74) Representative: Dehns

(56) References cited:
- US-A1- 2007 144 726
- US-A1- 2013 292 085
- US-A1- 2015 246 729
- US-A1- 2016 003 557

## Description

### BACKGROUND

Embodiments of the disclosure relate to environmental control systems of an aircraft, and more particularly, to an air distribution system for providing air having different temperatures to different zones within an aircraft.

In most aircraft, an air conditioning system is used to condition the aircraft cabin, the cockpit, and equipment within compartments such as the cargo bay or the avionics bay. In an air conditioning system having multiple zones, the actual temperature within each zone may vary. To account for these variations in temperature, conventional air conditioning systems include a trim valve dedicated to each zone for trimming cool conditioned air to create an air flow at the correct temperature for each particular zone. Control logic of the system typically determines which zone requires the coolest temperature air and uses that requirement to set the reference temperature at which the cool conditioned air is provided. The other zones of the system will use the trim valves associated therewith to mix hot air, for example bled from an engine of the aircraft, with the cool conditioned air to create a combined air flow at the proper temperature for each respective zone. Air distribution systems are described in US 2015/0246729 and US 2016/0003557.

Conventional trim systems include a variety of components which add both weight and complexity to the aircraft. Further, the noise generated as the air rushes through the trim valve of each section negatively affects the ride quality for passengers on the aircraft.

### BRIEF DESCRIPTION

According to the invention, a system for distributing air to a plurality of aircraft zones includes the features of claim 1.

According to another aspect of the invention, a method of distributing air to a plurality of aircraft zones includes the steps of claim 8.

### BRIEF DESCRIPTION OF THE DRAWINGS

The following descriptions should not be considered limiting in any way. With reference to the accompanying drawings, like elements are numbered alike:
FIG. 1 is a schematic diagram of an example of an aircraft having a plurality of zones associated with an air distribution system;
FIG. 2 is a schematic diagram of an air distribution system according to an embodiment; and
FIG. 3 is a schematic diagram of another air distribution system according to an embodiment.

### DETAILED DESCRIPTION

A detailed description of one or more embodiments of the disclosed apparatus and method are presented herein by way of exemplification and not limitation with reference to the Figures.

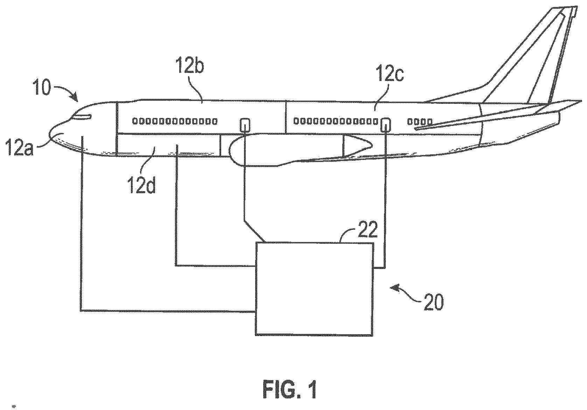

With reference now to FIG. 1, an example of an aircraft 10 is illustrated. The aircraft 10 is typically divided into several zones 12 with respect to an air conditioning system used to cool the aircraft 10. In the illustrated, non-limiting embodiment, the aircraft 10 includes four distinct zones 12. The cockpit of the aircraft 10 is a first zone 12a, the main cabin of the aircraft 10 is divided into a second and third zone 12b, 12c, and an avionics bay is a fourth zone 12d. However, any configuration of an aircraft 10 having any number of zones 12 is contemplated herein. A system 20 is configured to distribute conditioned air having a desired temperature to each of the plurality of zones 12 of the aircraft 10.

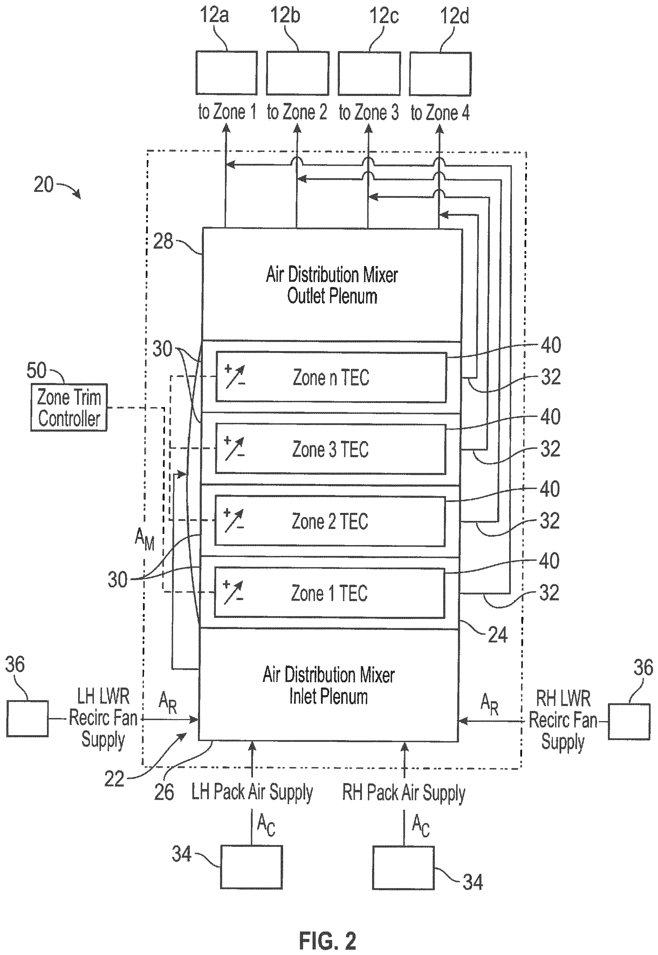

With reference to the FIG. 2, the system 20 for distributing conditioned air is shown in more detail. The system 20 includes an air distribution mixer 22 having a manifold 24, an inlet plenum 26 and an outlet plenum 28. As shown, the manifold 24 may be divided into a plurality of sections 30. In an embodiment, air is configured to flow from the inlet plenum 26 into each of the plurality of sections 30 of the manifold 24 in parallel. Alternatively, air from the inlet plenum 26 may be configured to flow through each of the plurality of sections 30 of the manifold 24 sequentially. A duct 32 is arranged in fluid communication with each section 30 of the manifold 24. In an embodiment, each duct 32 is associated with and configured to supply conditioned air having a desired temperature from a section 30 of the manifold 24 to a respective zone 12 of the aircraft.

The system 20 includes at least one air conditioning pack 34 for producing fresh, conditioned air. Although two air conditioning packs 34 are shown in the FIG., a left air conditioning pack and a right air conditioning pack, it should be understood that an air distribution system 20 having a single air conditioning pack 34 or more than two air conditioning packs 34 are also within the scope of the disclosure. Each of the plurality of packs 34 is arranged in fluid communication with the air mixer inlet plenum 26 such that conditioned air, illustrated schematically as A_{C}, from the plurality of air conditioning packs 34 is supplied to the air mixer 22.

Alternatively or in addition, recirculation air, illustrated schematically as A_{R}, returned from a pressurized portion of the aircraft, such as from the passenger cabin, cockpit, or select cargo areas for example, is provided to the air mixer inlet plenum 26. One or more fans 36 may be used to deliver the recirculation air A_{R} to the air mixer 22 where it is mixed with the fresh air A_{C} from the air conditioning packs 34 prior to distribution to the plurality of zones 12. The mixture of recirculation air A_{R} and conditioned air A_{C} within the manifold 24 will be referred to herein as mixed air A_{M}.

The demand, specifically the temperature of each of the plurality of zones 12 of the aircraft 10 may be different. Unlike conventional systems where the correct temperature for each particular zone 12 is achieved by combining the cool mixed air A_{M} with hot air, such as air bled from an engine of the aircraft for example, an electrical device 40 is used to heat the mixed air A_{M} within the manifold 24 to achieve the correct temperature for each zone 12. In an embodiment, the electrical device 40 includes a thermoelectric device, for example a thermoelectric cooler (TEC) positioned between the inlet plenum 26 and the outlet plenum 28 of the manifold 24. After the air is heated by the electrical device 40, the air from each section 30 of the manifold 24 is provided to a corresponding zone 12 of the aircraft 10 via ducts 32.

The TEC 40 can include one or more thermoelectric elements that transfer thermal energy in a particular direction when electrical energy is applied to the one or more thermoelectric elements. For example, when electrical energy is applied using a first polarity, the TEC 40 transfers thermal energy in a first direction. Alternatively, when electrical energy having a second polarity, opposite the first polarity is applied, the TEC 40 transfers thermal energy in a second direction, opposite the first direction. Accordingly, the TEC 40 may be selectively operated to transfer heat to or removed heat from the adjacent fluid or medium. In an embodiment, the TEC 40 may be a superlattice device having multiple of layers of two or more materials.

In an embodiment, best shown in FIG. 2, each section 30 of the manifold 24 has an individual TEC 40 associated therewith to heat the air within the section 30 to a desired temperature. In such embodiments, each TEC 40 is sized based on the section 30 and/or the demands of the corresponding zone 12 of the aircraft 10. Accordingly, the TEC 40 associated with a first section 30 of the manifold 24 may have a different configuration than a TEC 40 associated with another section 30 of the manifold 24.

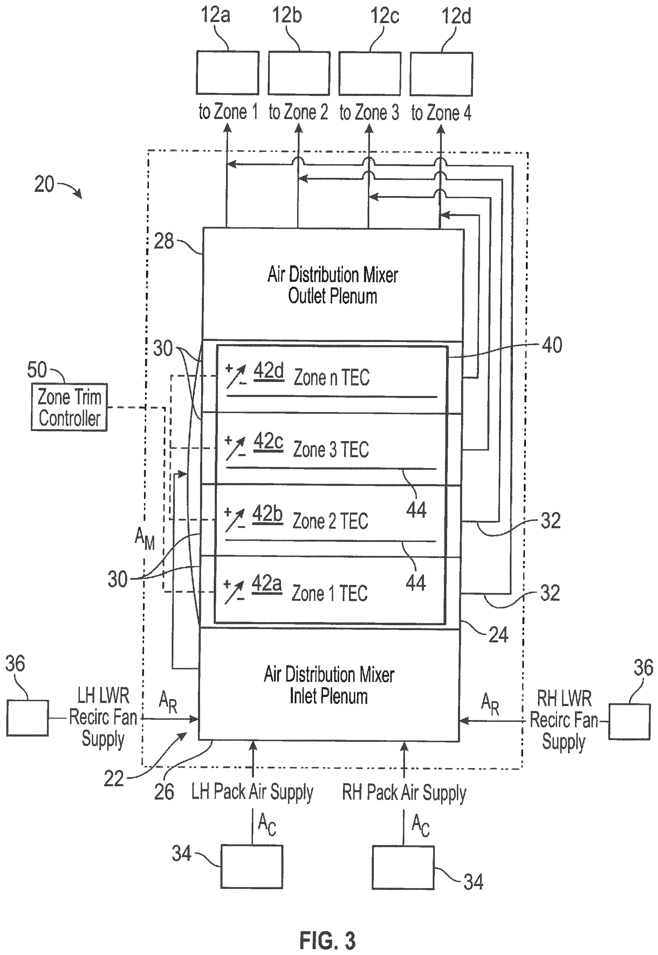

In another embodiment, illustrated in FIG. 3, a single TEC 40 having a plurality of zones 42 defined therein is associated with the manifold 24. The plurality of zones 42 may be formed by partitioning the TEC 40 using an orifice plate or other dividing mechanism 44. Each of the plurality of zones 42 of the TEC 40 is sized relative to the heating requirement of a respective one of the zones 12 of the aircraft 10. For example, in the illustrated, non-limiting embodiment, the TEC 40 includes four zones 42. A first zone 42a of the TEC 40 is fluidly connected to and sized to meet the heating requirements of the first aircraft zone 12a, a second zone 42b of the TEC 40 is fluidly connected to and sized to meet the heating requirements of the second aircraft zone 12b, a third zone 42c of the TEC 40 is fluidly connected to and sized to meet the heating requirements of the third aircraft zone 12c, and a fourth zone 42d of the TEC 40 is fluidly connected to and sized to meet the heating requirements of the fourth aircraft zone 12d.

A controller 50 is operably coupled to the at least one TEC 40. The controller can be an independent component, separable from the other system components. Alternatively, the controller may be integrated into another system controller or a centralized aircraft computer (not shown) of the aircraft. The controller 50 is programmed to control operation of the at least one TEC 40 based on the thermal demands of each of the aircraft zones 12. For example, the controller 50 is configured to determine the necessary amount of heat output from the at least one TEC 40 and control not only the amount but the polarity of the current provided to the at least one TEC 40 to achieve a desired temperature associated with each zone 12. In combination, the controller and the at least one TEC operate to trim up or trim down the temperature of the mixed air within each section 30 of the manifold 24 by varying the power and polarity of each TEC 40, or alternatively, each zone 42 of the TEC 40 independently.

Use of at least one TEC 40 to trim the air within the air mixer 22 before distributing the air to one or more zones 12 of an aircraft 10 eliminates the pressure regulation and throttling noise associated with conventional trim systems. In addition, the use of a TEC 40 requires a smaller installation volume than a conventional trim system. The reduced space requirement is a result of eliminating conventional trim system hardware, such as pressure regulating valves, check valves, pressure sensors, trim valves, mufflers, bulkhead shrouds, structural penetrations, and structural reinforcement doublers for example. The eliminated trim system also includes ducts, along with duct couplings, hangers and supports, and trim injectors.

While the invention has been described with reference to one or more embodiments, it will be understood by those skilled in the art that various changes may be made and equivalents may be substituted for elements thereof without departing from the scope of the invention as defined by the claims. In addition, many modifications may be made to adapt a particular situation or material to the teachings of the invention without departing from the essential scope thereof. Also, in the drawings and the description, there have been disclosed embodiments of the invention and, although specific terms may have been employed, they are unless otherwise stated used in a generic and descriptive sense only and not for purposes of limitation, the scope of the invention therefore not being so limited. Moreover, the use of the terms first, second, etc. , do not denote any order or importance, but rather the terms first, second, etc. are used to distinguish one element from another. Furthermore, the use of the terms a, an, etc. do not denote a limitation of quantity, but rather denote the presence of at least one of the referenced item.

## Claims

1. An aircraft comprising a plurality of aircraft zones and a system for distributing air to the plurality of aircraft zones, the system for distributing air comprising:
an air mixer (22) including an air inlet plenum (26) and a manifold (24), said manifold including a plurality of sections fluidly coupled to the plurality of aircraft zones;
**characterized in that** the system further comprises
at least one thermoelectric device (40) associated with said plurality of sections of said manifold, said at least one thermoelectric device operable to condition air within said plurality of sections to a desired temperature corresponding to the plurality of aircraft zones;
wherein said at least one thermoelectric device defines a plurality of zones (42), each of said plurality of zones being associated with one of said plurality of sections of said manifold and sized based on a demand of a respective one of the plurality of aircraft zones; and
a controller (50) operable to control an amount and polarity of current provided to the at least one thermoelectric device.

2. The aircraft of claim 1, wherein the thermoelectric device (40) is operable to condition air within a first section of the manifold to a first desired temperature corresponding to a first aircraft zone and air within a second section of the manifold to a second desired temperature corresponding to a second aircraft zone.

3. The aircraft of claim 1 or 2, wherein said plurality of sections of said manifold is coupled to said air inlet plenum in series.

4. The aircraft of claim 1 or 2, wherein said plurality of sections of said manifold is coupled to said air inlet plenum in parallel.

5. The aircraft of any preceding claim, wherein said at least one thermoelectric device includes a plurality of thermoelectric devices and each of said plurality of zones is defined by one of said plurality of thermoelectric devices.

6. The system of any of claims 1 to 4, wherein said at least one thermoelectric device includes one or more partitions (44) for defining said plurality of zones.

7. The aircraft of any preceding claim, wherein the inlet plenum (26) is arranged in fluid communication with at least one of an air conditioning pack (34) for provision of fresh, conditioned air and a pressurized portion of the aircraft for provision of recirculation air.

8. A method of distributing air to a plurality of aircraft zones in an aircraft as claimed in any preceding claim, comprising:
providing conditioned air to the plurality of sections of the manifold; and
trimming a temperature of said conditioned air within each of said plurality of sections using at least one thermoelectric device associated with said manifold.

9. The method of claim 8, wherein providing conditioned air to said plurality of sections of said manifold includes providing said conditioned air to said plurality of sections of said manifold in series.

10. The method of claim 8, wherein providing conditioned air to said plurality of sections of said manifold includes providing said conditioned air to said plurality of sections of said manifold in parallel.

11. The method of claim 8, 9 or 10, further comprising mixing recirculation air and air from an air conditioning pack provided at an air inlet plenum to form said conditioned air.

## Patentansprüche

1. Luftfahrzeug, umfassend eine Vielzahl von Luftfahrzeugzonen und ein System zum Verteilen von Luft zu der Vielzahl von Luftfahrzeugzonen, wobei das System zum Verteilen von Luft Folgendes umfasst:
einen Luftmischer (22), einschließend eine Lufteinlasskammer (26) und einen Verteilungsblock (24), wobei der Verteilungsblock eine Vielzahl von Abschnitten einschließt, die fluidisch an die Vielzahl von Luftfahrzeugzonen gekoppelt ist;
**dadurch gekennzeichnet, dass** das System ferner Folgendes umfasst:
mindestens eine thermoelektrische Vorrichtung (40), die mit der Vielzahl von Abschnitten des Verteilungsblocks assoziiert ist,
wobei mindestens eine thermoelektrische Vorrichtung betreibbar ist, um Luft in der Vielzahl von Abschnitten auf eine gewünschte Temperatur zu klimatisieren, die der Vielzahl von Luftfahrzeugzonen entspricht;
wobei die mindestens eine thermoelektrische Vorrichtung eine Vielzahl von Zonen (42) definiert, wobei jede der Vielzahl von Zonen mit einem der Vielzahl von Abschnitten des Verteilungsblocks assoziiert und auf Grundlage eines Bedarfs einer entsprechenden der Vielzahl von Luftfahrzeugzonen bemessen ist; und
eine Steuerung (50), die betreibbar ist, um eine Menge und Polarität von Strom zu steuern, welcher der mindestens einen thermoelektrischen Vorrichtung bereitgestellt wird.

2. Luftfahrzeug nach Anspruch 1, wobei die thermoelektrische Vorrichtung (40) betreibbar ist, um Luft in einem ersten Abschnitt des Verteilungsblocks auf eine erste gewünschte Temperatur zu klimatisieren, die einer ersten Luftfahrzeugzone entspricht und Luft in einem zweiten Abschnitt des Verteilungsblocks auf eine zweite gewünschte Temperatur zu klimatisieren, die einer zweiten Luftfahrzeugzone entspricht.

3. Luftfahrzeug nach Anspruch 1 oder 2, wobei die Vielzahl von Abschnitten des Verteilungsblocks an die Lufteinlasskammer in Reihe gekoppelt ist.

4. Luftfahrzeug nach Anspruch 1 oder 2, wobei die Vielzahl von Abschnitten des Verteilungsblocks an die Lufteinlasskammer parallel gekoppelt ist.

5. Luftfahrzeug nach einem der vorhergehenden Ansprüche, wobei die mindestens eine thermoelektrische Vorrichtung eine Vielzahl von thermoelektrischen Vorrichtungen einschließt und jede der Vielzahl von Zonen durch eine der Vielzahl von thermoelektrischen Vorrichtungen definiert ist.

6. System nach einem der Ansprüche 1 bis 4, wobei die mindestens eine thermoelektrische Vorrichtung eine oder mehrere Trennwände (44) einschließt, um die Vielzahl von Zonen zu definieren.

7. Luftfahrzeug nach einem der vorhergehenden Ansprüche, wobei die Einlasskammer (26) in Fluidkommunikation mit mindestens einem von einer Klimaanlagenbaugruppe (34) zum Bereitstellen von frischer, klimatisierter Luft und einem unter Druck stehenden Teil des Luftfahrzeugs zum Bereitstellen von Umluft angeordnet ist.

8. Verfahren zum Verteilen von Luft zu einer Vielzahl von Luftfahrzeugzonen in einem Luftfahrzeug nach einem der vorhergehenden Ansprüche, umfassend:
Bereitstellen von klimatisierter Luft für die Vielzahl von Abschnitten des Verteilungsblocks; und
Trimmen einer Temperatur der klimatisierten Luft in jedem der Vielzahl von Abschnitten unter Verwendung von mindestens einer thermoelektrischen Vorrichtung, die mit dem Verteilungsblock assoziiert ist.

9. Verfahren nach Anspruch 8, wobei das Bereitstellen von klimatisierter Luft für die Vielzahl von Abschnitten des Verteilungsblocks das Bereitstellen der klimatisierten Luft für die Vielzahl von Abschnitten des Verteilungsblocks in Reihe einschließt.

10. Verfahren nach Anspruch 8, wobei das Bereitstellen von klimatisierter Luft für die Vielzahl von Abschnitten des Verteilungsblocks das Bereitstellen der klimatisierten Luft für die Vielzahl von Abschnitten des Verteilungsblocks parallel einschließt.

11. Verfahren nach Anspruch 8, 9 oder 10, ferner umfassend das Vermischen von Umluft und Luft von einer Klimaanlagenbaugruppe, bereitgestellt an einer Lufteinlasskammer, um die klimatisierte Luft zu bilden.

## Revendications

1. Aéronef comprenant une pluralité de zones d'aéronef et un système de distribution d'air à la pluralité de zones d'aéronef, le système de distribution d'air comprenant :
un mélangeur d'air (22) comprenant un plénum d'admission d'air (26) et un collecteur (24), ledit collecteur comprenant une pluralité de sections couplées de manière fluidique à la pluralité de zones d'aéronef ;
**caractérisé en ce que** le système comprend en outre
au moins un dispositif thermoélectrique (40) associé à ladite pluralité de sections dudit collecteur, ledit au moins un dispositif thermoélectrique pouvant être utilisé pour conditionner l'air à l'intérieur de ladite pluralité de sections à une température souhaitée correspondant à la pluralité de zones d'aéronef ;
dans lequel ledit au moins un dispositif thermoélectrique définit une pluralité de zones (42), chacune de ladite pluralité de zones étant associée à l'une de ladite pluralité de sections dudit collecteur et dimensionnée sur la base d'une demande d'une zone d'aéronef respective de la pluralité de zones d'aéronef ; et
un dispositif de contrôle (50) pouvant être utilisé pour contrôler une quantité et une polarité de courant fourni à l'au moins un dispositif thermoélectrique.

2. Aéronef selon la revendication 1, dans lequel le dispositif thermoélectrique (40) peut être utilisé pour conditionner l'air à l'intérieur d'une première section du collecteur à une première température souhaitée correspondant à une première zone d'aéronef et l'air à l'intérieur d'une seconde section du collecteur à une seconde température souhaitée correspondant à une seconde zone d'aéronef.

3. Aéronef selon la revendication 1 ou 2, dans lequel ladite pluralité de sections dudit collecteur est couplée audit plénum d'admission d'air en série.

4. Aéronef selon la revendication 1 ou 2, dans lequel ladite pluralité de sections dudit collecteur est couplée audit plénum d'admission d'air en parallèle.

5. Aéronef selon une quelconque revendication précédente, dans lequel ledit au moins un dispositif thermoélectrique comprend une pluralité de dispositifs thermoélectriques et chacune de ladite pluralité de zones est définie par une de ladite pluralité de dispositifs thermoélectriques.

6. Système selon l'une quelconque des revendications 1 à 4, dans lequel ledit au moins un dispositif thermoélectrique comprend une ou plusieurs cloisons (44) pour définir ladite pluralité de zones.

7. Aéronef selon une quelconque revendication précédente, dans lequel le plénum d'admission (26) est agencé en communication fluidique avec au moins l'un d'un groupe de conditionnement d'air (34) pour la fourniture d'air conditionné frais et une partie pressurisée de l'aéronef pour la fourniture d'air recyclé.

8. Procédé de distribution d'air à une pluralité de zones d'aéronef dans un aéronef selon une quelconque revendication précédente, comprenant :
la fourniture d'air conditionné à la pluralité de sections du collecteur ; et
la réduction d'une température dudit air conditionné à l'intérieur de chacune de ladite pluralité de sections en utilisant au moins un dispositif thermoélectrique associé audit collecteur.

9. Procédé selon la revendication 8, dans lequel la fourniture d'air conditionné à ladite pluralité de sections dudit collecteur comprend la fourniture dudit air conditionné à ladite pluralité de sections dudit collecteur en série.

10. Procédé selon la revendication 8, dans lequel la fourniture d'air conditionné à ladite pluralité de sections dudit collecteur comprend la fourniture dudit air conditionné à ladite pluralité de sections dudit collecteur en parallèle.

11. Procédé selon la revendication 8, 9 ou 10, comprenant en outre le mélange d'air de recyclage et d'air provenant d'un groupe de conditionnement d'air fourni au niveau d'un plénum d'admission d'air pour former ledit air conditionné.
